# EUROPEAN PATENT APPLICATION

(11) **EP 2 552 008 A1**
(43) Date of publication of application: **30.01.2013**
(21) Application number: 10848326.4
(22) Date of filing: 06.07.2010
(51) Int. Cl.: H02M 7/5387, A47L 9/00, A47L 9/28, H02M 1/08, H02M 7/48, H02P 27/06

(54) **INVERTER DEVICE AND ELECTRIC DEVICE USING SAME**

(30) Priority: 25.03.2010 JP 2010069651
(71) Applicant: Panasonic Corporation, Kadoma-shi Osaka 571-8501 (JP)
(72) Inventor: MATSUI, Keizou, Chuo-ku, Osaka 540-6207 (JP); IMAI, Makoto, Chuo-ku, Osaka 540-6207 (JP)
(74) Representative: Schwabe - Sandmair - Marx
(86) International application number: PCT/JP2010/004404
(87) International publication number: WO 2011/117932

(57) **Abstract**

The present invention relates to an inverter device including an upper arm switching circuit, a lower arm switching circuit, a control unit that controls the upper arm switching circuit and the lower arm switching circuit, a plurality of voltage-driven switching elements forming the upper arm switching circuit, a plurality of current-driven switching elements forming the lower arm switching circuit, and a bootstrap circuit that applies a driving voltage to the switching elements of the upper arm switching circuit and the lower arm switching circuit. With this configuration, the circuit loss is reduced and thus efficiency is improved.

## Description

### TECHNICAL FIELD

The present invention relates to an inverter device which includes a plurality of switching elements and drives a load such as a motor, and an electric apparatus using the same, and particularly to a vacuum cleaner using the inverter device for a driving device of a fan motor.

### BACKGROUND ART

An inverter device converts input power from a power supply into AC of a desired output frequency, which is used to drive a motor or the like. The inverter device generally includes a switching circuit which has a plurality of serial circuits where two switching elements on the upstream side and the downstream side according to an application direction of the power supply voltage are connected in series to each other. Hereinafter, the switching circuit forming the upstream side is referred to as an "upper arm switching circuit", and the switching circuit forming the downstream side is referred to as a "lower arm switching circuit". As the switching element, a voltage-driven IGBT (Insulated Gate Bipolar Transistor), a MOSFET, or the like is used.

In the related art, all the switching elements of the upper arm switching circuit and the lower arm switching circuit are constituted using the same element in the general inverter device.

On the other hand, an inverter device is disclosed in which the IGBT is used for the upper arm switching circuit, and the MOSFET is used for the lower arm switching circuit (for example, refer to PTL 1). This uses a characteristic where loss is small at the time of high voltage and high current output since a voltage between both ends is constant when the IGBT is turned on, and a high frequency switching characteristic due to the high turning-on and turning-off speed of the MOSFET and a characteristic where loss is small at the time of low voltage and low current output. Thereby, it is possible to improve efficiency of the inverter device.

However, since, in the inverter device, the upper arm switching circuit and the lower arm switching circuit are constituted by different kinds (the IGBT and the MOSFET) of voltage-driven switching elements, it is difficult to maximize efficiency of the inverter device in consideration of both of conduction loss and switching loss of the different switching elements.

There is a disclosure of a power generation apparatus including an inverter circuit which has a bootstrap circuit using charge accumulated in a capacitor as a driving power supply of switching elements of the upper arm switching circuit and the lower arm switching circuit (for example, refer to PTL 2).

At this time, the same element (IGBT) which is of a voltage-driven type is used for the switching elements of the upper arm switching circuit and the lower arm switching circuit. In order to prevent a voltage of the capacitor of the bootstrap circuit from being reduced, the upper arm switching circuit is driven by a PWM signal of a duty cycle which is equal to or less than a predetermined value. Thereby, circuit configuration is simplified, and thus it is possible to implement a small-sized, light-weighted, low cost inverter circuit.

However, in the inverter circuit, in the voltage-driven switching elements of the upper arm switching circuit and the lower arm switching circuit, it is difficult to reduce circuit loss such as the conduction loss or switching loss or to perform high-speed driving.

Therefore, if a current-driven switching element which has small circuit loss and can perform high-speed driving is used for the upper arm switching circuit and the lower arm switching circuit, large driving power is necessary. For this reason, a new driving power supply other than the bootstrap circuit is necessary, or the bootstrap circuit is required to be constituted by a capacitor of large capacitance. As a result, it is not possible to implement a high efficiency, small-sized, light-weighted, and low cost inverter circuit.

### Citation List

### Patent Literature

PTL 1: Japanese Patent Unexamined Publication No. 2007-129848
PTL 2: Japanese Patent Unexamined Publication No. 11-252970

### SUMMARY OF THE INVENTION

The present invention relates to an inverter device including an upper arm switching circuit, a lower arm switching circuit, a control unit driving them, voltage-driven switching elements of the upper arm switching circuit, current-driven switching elements of the lower arm switching circuit, and a bootstrap circuit applying a driving voltage to each switching element.

Thereby, it is possible to reduce circuit costs, and to implement an inverter device having a low circuit loss and high efficiency by optimally controlling driving of the switching elements.

An electric apparatus of the present invention has a configuration where the inverter device is used for a driving device of a motor. Thereby, it is possible to implement an electric apparatus having good driving efficiency at low cost.

### BRIEF DESCRIPTION OF DRAWINGS

[Fig. 1] Fig. 1 is a configuration diagram illustrating a configuration of an inverter device according to a first embodiment of the present invention.
[Fig. 2] Fig. 2 is a schematic diagram illustrating circuit loss with respect to a carrier frequency of the inverter device according to the first embodiment of the present invention.
[Fig. 3] Fig. 3 is a diagram illustrating a driving method where only the lower arm switching circuit is PWM-driven in the inverter device according to the first embodiment of the present invention.
[Fig. 4] Fig. 4 is a diagram illustrating a driving method where only the upper arm switching circuit is PWM-driven in the inverter device according to the first embodiment of the present invention.
[Fig. 5] Fig. 5 is a diagram illustrating an output frequency for changing PWM driving of the inverter device according to the first embodiment of the present invention.
[Fig. 6] Fig. 6 is a diagram illustrating a driving method of an inverter device according to a second embodiment of the present invention.
[Fig. 7] Fig. 7 is a diagram illustrating a driving method of the inverter device according to another example of the second embodiment of the present invention.
[Fig. 8] is a diagram illustrating an output frequency for changing driving methods of the inverter device according to the second embodiment of the present invention.
[Fig. 9] Fig. 9 is a cutaway perspective view illustrating an outline of a vacuum cleaner according to a third embodiment of the present invention.

### DESCRIPTION OF EMBODIMENTS

Hereinafter, embodiments of the present invention will be described with reference to the drawings. The present invention is not limited to the embodiments.

### FIRST EXEMPLARY EMBODIMENT

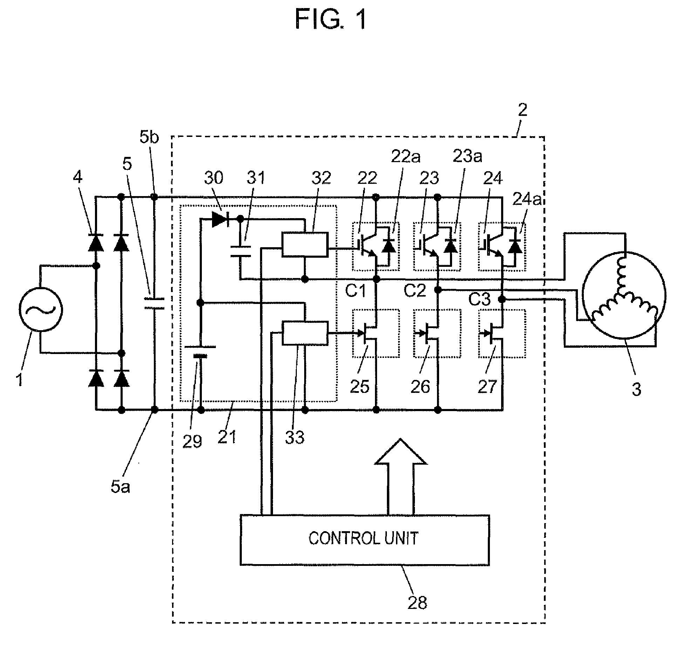

Fig. 1 is a configuration diagram illustrating a configuration of an inverter device according to a first embodiment.

As shown in Fig. 1, AC power input from AC power supply 1 is temporarily converted into a DC power supply voltage by rectifying circuit 4 and smoothing capacitor 5 so as to be applied to inverter device 2, and three-phase (a U phase, a V phase, and a W phase) signals output from inverter device 2 are applied to by control unit 28 and drive motor 3.

Here, inverter device 2 is constituted by an upper arm switching circuit including switching elements 22, 23 and 24, a lower arm switching circuit including switching elements 25, 26 and 27, driving circuit 21 including bootstrap circuits, and control unit 28 controlling them. Respective corresponding pairs (22 and 25), (23 and 26) and (24 and 27) of the switching elements of the upper arm switching circuit and the lower arm switching circuit are connected in series and form three-phase serial circuits. In Fig. 1, only the bootstrap circuit driving switching elements 22 and 25 is shown, and the bootstrap circuits driving switching elements 23 and 26 and switching elements 24 and 27 are not shown. At this time, switching elements 22, 23 and 24 of the upper arm switching circuit use, for example, a voltage-driven switching element such as an IGBT semiconductor device, and the switching elements are respective connected in parallel to free wheeling diodes 22a, 23a and 24a. Switching elements 25, 26 and 27 of the lower arm switching circuit use, for example, a current-driven gallium nitride (GaN) semiconductor device which can perform a switching operation at higher speed than switching elements 22, 23 and 24 of the upper arm switching circuit and has high efficiency. The voltage-driven switching element changes conduction due to a change in a voltage applied to the gate terminal, and the current-driven switching element changes conduction due to a change in a current applied to the gate terminal.

Three connection points C1, C2 and C3 between the upper arm switching circuit and the lower arm switching circuit in the serial circuits are connected to motor 3 which is a load, and three-phase AC power is supplied thereto at a predetermined output frequency.

Control unit 28 controls the respective switching elements 22 to 27 such that motor 3 rotates at a desired rotation rate, for example, inverter device 2 outputs three-phase AC power. At this time, generally, as a control method of the switching elements, a pulse width modulation (hereinafter, referred to as a "PWM") is used in which an output voltage is controlled by a time width of the driving pulse generated at a carrier frequency.

Thereby, the switching elements having different characteristics such as the voltage-driven type and the current-voltage type are used for the upper arm switching circuit and the lower arm switching circuit, which are driven by an optimal driving method in consideration of characteristics of the switching elements described below, and thereby it is possible to implement an inverter device having high efficiency with a low cost configuration.

Driving circuit 21 is constituted by a bootstrap circuit which includes upper arm driver circuit 32, lower arm driver circuit 33, driver power supply 29, capacitor 31 of which the low voltage side is connected to connection point C1 between the upper arm switching circuit and the lower arm switching circuit, diode 30 connected between capacitor 31 and driver power supply 29. Driving circuit 21 drives the respective switching element pairs of the upper arm switching circuit and the lower arm switching circuit forming the respective phases. At this time, upper arm driver circuit 32 drives switching elements 22, 23 and 24 of the upper arm switching circuit, and the lower arm driver circuit 33 drives switching elements 25, 26 and 27 of the lower arm switching circuit.

A driving voltage which is modulated into the carrier frequency of control unit 28 is supplied to the switching elements of the lower arm switching circuit from driver power supply 29 via lower arm driver circuit 33. A driving voltage which is modulated into the carrier frequency of control unit 28 is supplied to the switching elements of the upper arm switching circuit from capacitor 31 via upper arm driver circuit 32.

Hereinafter, there will be made a description of a method of charging capacitor 31 which supplies the driving voltage to the switching elements of the upper arm switching circuit via upper arm driver circuit 32.

First, if the switching elements of the lower arm switching circuit are conducted (turned on), potentials of connection points C1, C2 and C3 between the switching elements of the upper arm switching circuit and the switching elements of the lower arm switching circuit are the same as each other due to connection to lower potential side 5a of the power supply voltage which is converted into DC by smoothing capacitor 5, that is, the lower potential side 5a of the DC power input to inverter device 2. Thereby, charge is accumulated in capacitor 31 from driver power supply 29 via diode 30. The charge accumulated in capacitor 31 drives the switching elements of the upper arm switching circuit via the upper arm driver circuit.

Thereby, both the upper arm switching circuit and the lower arm switching circuit can be driven by single driver power supply 29. For this reason, it is possible to implement a small-sized and low cost driving circuit.

However, typically, driving circuit 21 constituted by a bootstrap circuit can use only very low power for driving in order to supply a driving voltage for driving upper arm driver circuit 32 with charge accumulated in capacitor 31. Therefore, if a voltage-driven switching element which can be driven with very low power is used for the upper arm switching circuit, it is possible to perform driving with charge accumulated in capacitor 31. On the other hand, if a current-driven switching element which requires high power is used for the upper arm switching circuit, a capacitor having very large capacitance is required for driving, and thus costs of a driving circuit is increased and the driving circuit becomes large-sized.

Therefore, in the inverter device according to the present embodiment, voltage-driven switching elements 22, 23 and 24 such as, for example, an IGBT semiconductor device are used for the upper arm switching circuit, and thereby it is possible to realize driving of the switching elements using the bootstrap circuit having small-sized and small capacitance capacitor 31. On the other hand, current-driven switching elements 25, 26 and 27 such as, for example, a GaN semiconductor device, are used for the lower arm switching circuit. At this time, the lower arm switching circuit can be directly driven by the driver power supply 29, and thus current-driven switching elements 25, 26 and 27 can be easily driven even though driving circuit 21 is constituted by the bootstrap circuit.

Hereinafter, an optimal driving method of the inverter device according to the embodiment of the present invention will be described.

First, circuit loss with respect to the carrier frequency of the inverter device will be described with reference to the drawings. Here, the circuit loss includes conduction loss of the switching elements and switching loss.

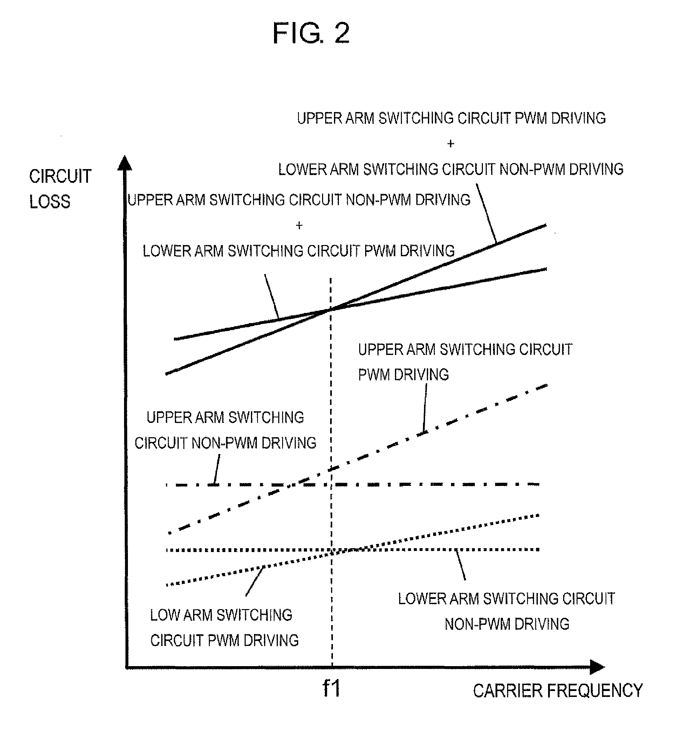

Fig. 2 is a schematic diagram illustrating circuit loss with respect to the carrier frequency of the inverter device according to the first embodiment of the present invention.

Generally, in a case where the switching elements are driven by the PWM, circuit loss generated in the switching elements is increased as the carrier frequency of the PWM is heightened. On the other hand, in a case where the PWM driving is not performed, the circuit loss of the switching elements is not varied with respect to the carrier frequency. Typically, the circuit loss of the voltage-driven switching elements used for the upper arm switching circuit is larger than the circuit loss of the current-driven switching elements used for the lower arm switching circuit.

In the same manner, an increase rate of the circuit loss with respect to the carrier frequency when the PWM driving is performed is smaller in the switching elements of the lower arm switching circuit. The circuit loss in a case where the PWM driving is not performed is also smaller in the switching elements of the lower arm switching circuit.

This is because the gallium nitride (GaN) semiconductor device used for switching elements 25, 26 and 27 of the lower arm switching circuit has smaller conduction (turned-on) loss than the IGBT semiconductor device used for switching elements 22, 23 and 24 of the upper arm switching circuit, can perform a high-speed switching operation, and thus efficiency is high.

Next, a driving method of the inverter device according to the first embodiment will be described with reference to the drawings.

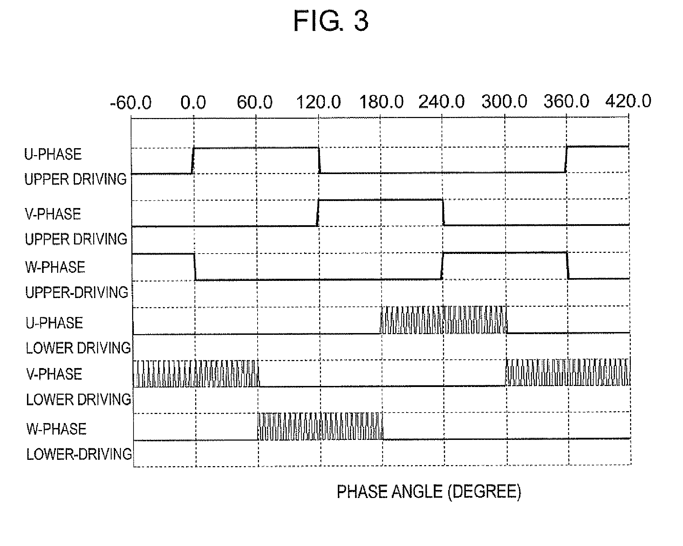

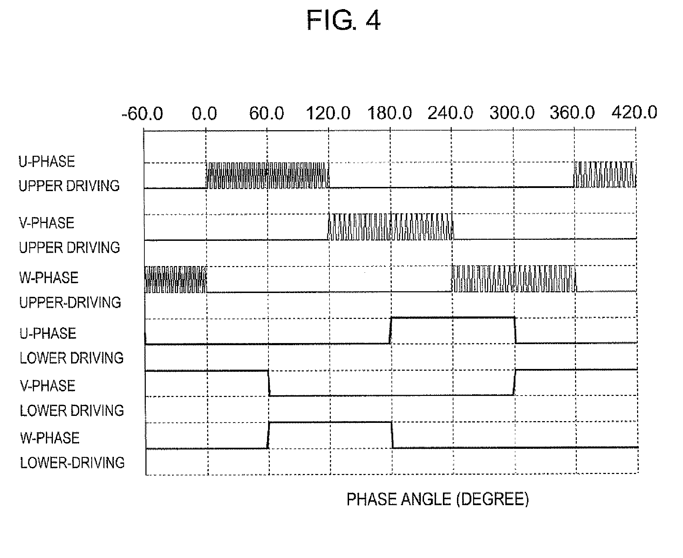

Fig. 3 is a diagram illustrating a driving method in a case where only the lower arm switching circuit is PWM-driven in the inverter device according to the first embodiment of the present invention. Fig. 4 is a diagram illustrating a driving method in a case where only the upper arm switching circuit is PWM-driven in the inverter device according to the first embodiment of the present invention.

In other words, as shown in Fig. 3, an output voltage is adjusted by changing voltages applied in three phases (the U phase, the V phase, and the W phase) every 120 degrees with respect to phase angles of a rotor of the motor and changing conduction ratios (duty) of the switching elements of the lower arm switching circuit which is PWM-driven. On the other hand, as shown in Fig. 4, an output voltage is adjusted by changing voltages applied in three phases (the U phase, the V phase, and the W phase) every 120 degrees with respect to phase angles of the rotor of the motor and changing conduction ratios (duty) of the switching elements of the upper arm switching circuit which is PWM-driven. Thereby, power of a desired output frequency can be output and the motor which is a load can be driven by any driving method shown in Fig. 3 or 4.

At this time, the circuit loss in the driving methods shown in Figs. 3 and 4 is a sum of the respective circuit losses as shown in Fig. 2. Specifically, in a case where only the lower arm switching circuit shown in Fig. 3 is PWM-driven, the circuit loss is a sum of the circuit loss of the switching elements of the lower arm switching circuit when the PWM driving is performed and the circuit loss of the switching elements of the upper arm switching circuit when the PWM driving is not performed. In the same manner, in a case where only the upper arm switching circuit shown in Fig. 4 is PWM-driven, the circuit loss is a sum of the circuit loss of the switching elements of the upper arm switching circuit when the PWM driving is performed and the circuit loss of the switching elements of the lower arm switching circuit when the PWM driving is not performed.

As shown in Fig. 2, if the carrier frequency is greater (higher) than predetermined carrier frequency f1, the circuit loss is lower in a case where only the lower arm switching circuit is PWM-driven. On the contrary, if the carrier frequency is smaller (lower) than predetermined carrier frequency f1, the circuit loss is lower in a case where only the upper arm switching circuit is PWM-driven.

That is to say, the inverter device of the present invention uses the switching elements of different characteristics (voltage-driven and current-driven types) for the upper arm switching circuit and the lower arm switching circuit, and can optimally perform driving with a low circuit loss so as to be suitable for the characteristics of the respective switching elements by changing the PWM driving at predetermined carrier frequency f1. Thereby, it is possible to implement an inverter device which has a low circuit loss and high efficiency with a low cost configuration.

Hereinafter, there will be made of a description of an output frequency for reducing the circuit loss of the inverter device by driving the switching elements at a predetermined carrier frequency and by changing the PWM driving between the upper arm switching circuit and the lower arm switching circuit.

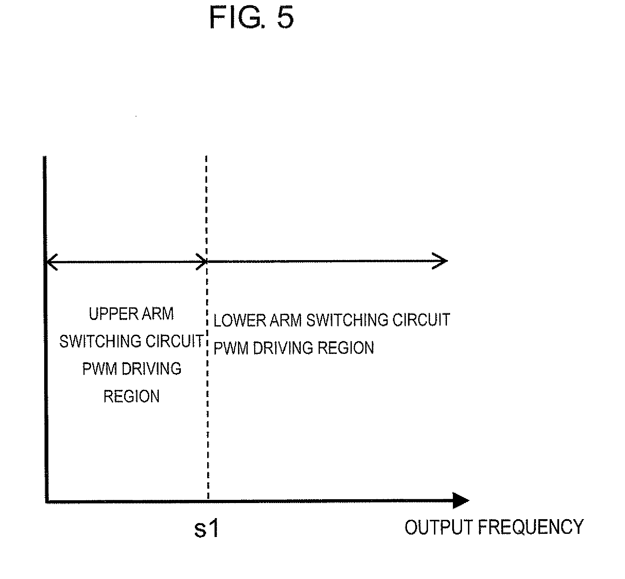

Fig. 5 is a diagram illustrating an output frequency for changing the PWM driving of the inverter device according to the first embodiment of the present invention. Fig. 5 shows a case where the carrier frequency is greater (higher) than predetermined carrier frequency f1 as an example.

Fig. 5 shows a case where only the upper arm switching circuit shown in Fig. 4 is PWM-driven when an AC output frequency output by the inverter device is equal to or less than predetermined output frequency s1. On the other hand, when the output frequency exceeds predetermined output frequency s1, a case where only the lower arm switching circuit is PWM-driven is shown. Thereby, it is possible to implement an inverter device which can be driven with a low circuit loss. Here, predetermined output frequency s1 is an output frequency where a voltage of the capacitor of the bootstrap circuit is the same as a driving voltage for driving the switching elements of the upper arm switching circuit via the upper arm driver circuit.

Hereinafter, there will be made of a description of a reason why the PWM driving changes between the upper arm switching circuit and the lower arm switching circuit when the output frequency is predetermined output frequency s1.

The bootstrap circuit forming driving circuit 21 of the inverter device of the present embodiment accumulates charge in capacitor 31 for a time when the lower arm switching circuit is conducted (turned on), and drives the switching elements of the upper arm switching circuit at a predetermined carrier frequency using the accumulated charge.

For this reason, if conduction (turned-on) time of the switching elements of the lower arm switching circuit is shorter than conduction (turned-on) time of the switching elements of the upper arm switching circuit, capacitor 31 cannot be sufficiently charged. As a result, if the voltage of capacitor 31 is lower than a driving voltage of the switching elements of the upper arm switching circuit, the switching elements cannot be driven.

Particularly, in a case where only the lower arm switching circuit is PWM-driven, if time when the switching elements of the upper arm switching circuit are continuously conducted (turned on) is long, the voltage of capacitor 31 which is a driving voltage for conducting (turning on) the switching elements of the upper arm switching circuit is lowered.

That is to say, in a case where an output frequency of the inverter device is equal to or less than predetermined output frequency s1, as shown in Fig. 3, if only the lower arm switching circuit is PWM-driven, the voltage of capacitor 31 is lowered since the switching elements of the upper arm switching circuit are continuously conducted (turned on). Therefore, in order to prevent the voltage of capacitor 31 from being lowered, only the upper arm switching circuit is PWM-driven, as shown in Fig. 4, in a case where an output frequency is equal to or less than predetermined output frequency s1. Thereby, the switching elements of the upper arm switching circuit can be stabilized and be driven.

On the other hand, if an output frequency of the inverter device exceeds predetermined output frequency s1, only the lower arm switching circuit is preferably PWM-driven since a case where the carrier frequency is greater (higher) than predetermined carrier frequency f1 is assumed in Fig. 5. Thereby, it is possible to implement an inverter device having a low circuit loss.

As described above, the PWM driving changes between the upper arm switching circuit and the lower arm switching circuit at predetermined output frequency s1 in the inverter device, and thereby the inverter device can be driven in a state where the circuit loss is low over the full range of the output frequency.

### SECOND EXEMPLARY EMBODIMENT

Hereinafter, an inverter device according to a second embodiment of the present invention will be described in detail with reference to the drawings. A configuration of the inverter device according to the second embodiment is the same as that of the inverter device according to the first embodiment. In the same manner, control unit 28 controls inverter device 2 so as to output AC power where motor 3 rotates at a desired rotation rate. At this time, switching elements 22 to 27 are controlled through the pulse width modulation (PWM) where a time width of the driving pulse of the sinusoidal voltage is adjusted and is output.

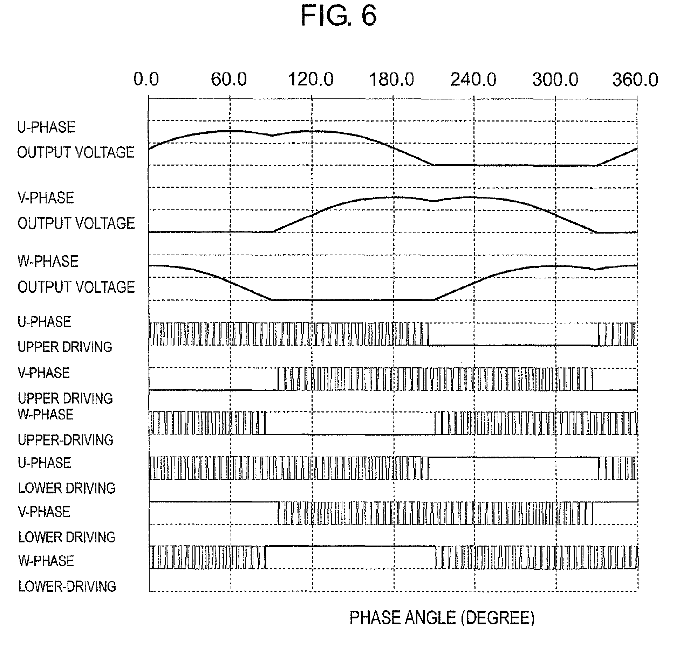

Fig. 6 is a diagram illustrating a driving method of the inverter device according to the second embodiment of the present invention.

As shown in Fig. 6, the driving method is a method in which, in relation to minimal voltages of three-phase (a U phase, a V phase, and a W phase) output voltages output from the inverter device, only a single phase is affixed to a DC low potential side, and other two phases are PWM-driven, during a predetermined time period.

Hereinafter, a driving method of the inverter device will be described in detail with reference to Fig. 6.

In other words, as shown in Fig. 6, the U-phase output voltage is affixed to the minimal voltage of the DC low potential side during a time period of 120 degrees from the phase angle 210 degrees to the phase angle 330 degrees, the V-phase output voltage is affixed to the minimal voltage of the DC low potential side during a time period from the phase angle 0 degrees to the phase angle 90 degrees and from the phase angle 330 degrees to the phase angle 360 degrees, and the W-phase output voltage is affixed to the minimal voltage of the DC low potential side during a time period from the phase angle 90 degrees to the phase angle 210 degrees. For example, during the time period when the U-phase output voltage is affixed to the minimal voltage, the other two phases (the V phase and the W phase) are PWM-driven such that inter-phase voltages of three phases are a sinusoidal wave. The above-described driving method is referred to as a "lower affixing two-phase modulation". The minimal voltage of the DC low potential side indicates a potential of low potential side 5a of the power supply voltage (a terminal voltage of the smoothing capacitor) which is converted into DC by smoothing capacitor 5 shown in Fig. 1.

At this time, driving pulses of switching elements 22, 23 and 24 of the upper arm switching circuit are output for the U-phase upper driving, the V-phase upper driving, and the W-phase upper driving in Fig. 6. On the other hand, driving pulses of switching elements 25, 26 and 27 of the lower arm switching circuit are output for the U-phase lower driving, the V-phase lower driving, and the W-phase lower driving in Fig. 6. Thereby, power of a desired output frequency is output from inverter device 2, and drives motor 3 which is a load.

In a case where the inverter device is driven by the PWM shown in Fig. 6, the three-phase output voltages which are output from the inverter device are voltages with a low potential biased to the DC low potential side. For this reason, conduction (turned-on) time of switching elements 25, 26 and 27 of the lower arm switching circuit is a larger value than conduction (turned-on) time of switching elements 22, 23 and 24 of the upper arm switching circuit.

At this time, in the inverter device of the present embodiment, a conduction (turned-on) loss of the current-driven switching elements of the lower arm switching circuit is lower than a conduction (turned-on) loss of the voltage-driven switching elements of the upper arm switching circuit. For this reason, it is possible to reduce the circuit loss by shortening the conduction (turned-on) time of the upper arm switching circuit having the higher conduction (turned-on) loss. As a result, it is possible to implement an inverter device where the circuit loss is reduced by the PWM driving method.

Hereinafter, another example of the inverter device according to the second embodiment of the present invention will be described.

The inverter device according to another example of the present embodiment relates to a driving method in a case where the voltage-driven switching elements of the upper arm switching circuit has a lower conduction (turned-on) loss than the current-driven switching elements of the lower arm switching circuit.

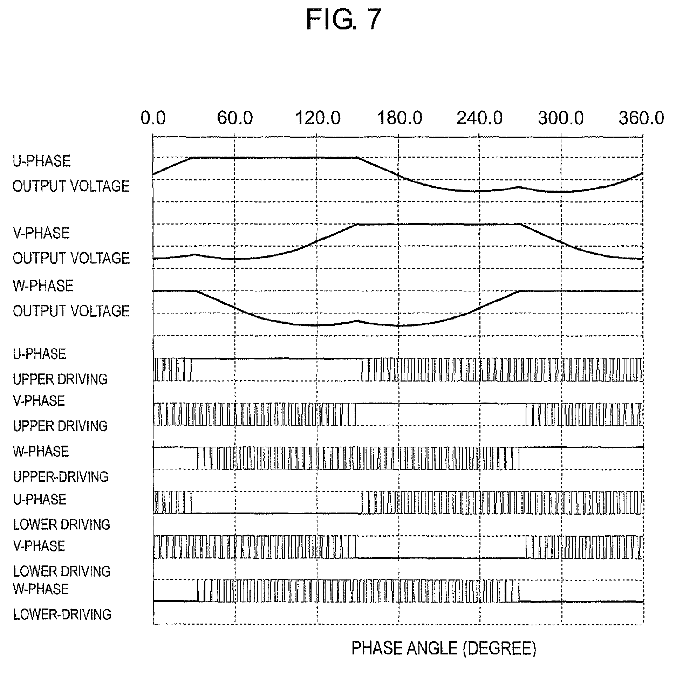

Fig. 7 is a diagram illustrating a driving method of the inverter device according to another example of the second embodiment of the present invention.

As shown in Fig. 7, the driving method is a method in which, in relation to maximal voltages of three-phase (a U phase, a V phase, and a W phase) output voltages output from the inverter device, only a single phase is affixed to a DC high potential side, and other two phases are PWM-driven, during a predetermined time period.

Hereinafter, a driving method of the inverter device will be described in detail with reference to Fig. 7.

In other words, as shown in Fig. 7, the U-phase output voltage is affixed to the maximal voltage of the DC high potential side during a time period of 120 degrees from the phase angle 30 degrees to the phase angle 150 degrees, the V-phase output voltage is affixed to the maximal voltage of the DC high potential side during a time period from the phase angle 150 degrees to the phase angle 270 degrees, and the W-phase output voltage is affixed to the maximal voltage of the DC high potential side during a time period from the phase angle 0 degrees to the phase angle 30 degrees and from the phase angle 270 degrees to the phase angle 360 degrees. For example, during the time period when the U-phase output voltage is affixed to the maximal voltage, the other two phases (the V phase and the W phase) are PWM-driven such that inter-phase voltages of three phases are a sinusoidal wave. The above-described driving method is referred to as an "upper affixing two-phase modulation". The maximal voltage of the DC low potential side indicates a potential of high potential side 5b of the power supply voltage (a terminal voltage of the smoothing capacitor) which is converted into DC by smoothing capacitor 5 shown in Fig. 1.

At this time, driving pulses of switching elements 22, 23 and 24 of the upper arm switching circuit are output for the U-phase upper driving, the V-phase upper driving, and the W-phase, upper driving in Fig. 7. On the other hand, driving pulses of switching elements 25, 26 and 27 of the lower arm switching circuit are output for the U-phase lower driving, the V-phase lower driving, and the W-phase lower driving in Fig. 7.

Thereby, power of a desired output frequency is output from inverter device 2, and drives motor 3 which is a load.

In a case where the inverter device is driven by the PWM shown in Fig. 7, the three-phase output voltages which are output from inverter device 2 are voltages with a high potential biased to the DC high potential side. For this reason, conduction (turned-on) time of switching elements 25, 26 and 27 of the lower arm switching circuit is a smaller value than conduction (turned-on) time of switching elements 22, 23 and 24 of the upper arm switching circuit.

At this time, in the inverter device according to another example of the present embodiment, a conduction (turned-on) loss of the current-driven switching elements of the lower arm switching circuit is higher than a conduction (turned-on) loss of the voltage-driven switching elements of the upper arm switching circuit. For this reason, it is possible to reduce the circuit loss by shortening the conduction (turned-on) time of the lower arm switching circuit having the higher conduction (turned-on) loss. As a result, it is possible to implement an inverter device where the circuit loss is reduced by the PWM driving method.

Hereinafter, there will be made a description of an output frequency for changing driving methods of the inverter device according to the second embodiment of the present invention.

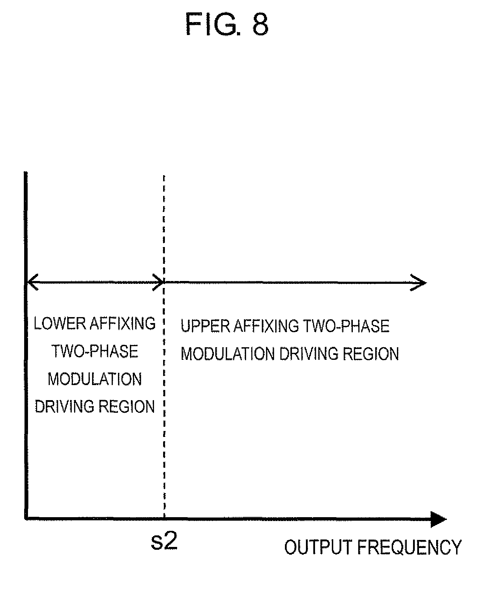

Fig. 8 is a diagram illustrating an output frequency for changing driving methods of the inverter device according to the second embodiment of the present invention. In this case, a case where the voltage-driven switching elements of the upper arm switching circuit have a lower conduction (turned-on) loss than the current-driven switching elements of the lower arm switching circuit will be described as an example.

As shown in Fig. 8, in a case where an AC frequency output by the inverter device is equal to or less than predetermined output frequency s2, the inverter device is PWM-driven by the above-described lower affixing two-phase modulation where the minimal voltages of the three-phase output voltages shown in Fig. 6 are affixed to the DC low potential side. On the other hand, in a case where an AC frequency output by the inverter device exceeds predetermined output frequency s2, the inverter device is PWM-driven by the above-described upper affixing two-phase modulation where the maximal voltages of the three-phase output voltages shown in Fig. 7 are affixed to the DC high potential side.

Thereby, it is possible to implement an inverter device which can be driven with a low circuit loss over the full range of the output frequency. Here, the predetermined output frequency s2 is an output frequency where a voltage of the capacitor of the bootstrap circuit is the same as a driving voltage for driving the switching elements of the upper arm switching circuit via the upper arm driver circuit.

Hereinafter, there will be made of a description of a reason why the driving methods of the inverter device change at predetermined output frequency s2.

Bootstrap circuit forming driving circuit 21 of the inverter device of the present embodiment accumulates charge in capacitor 31 for a time when the lower arm switching circuit is conducted (turned on), and drives the switching elements of the upper arm switching circuit at a predetermined carrier frequency using the accumulated charge.

For this reason, if conduction (turned-on) time of the switching elements of the lower arm switching circuit is shorter than conduction (turned-on) time of the switching elements of the upper arm switching circuit, capacitor 31 cannot be sufficiently charged. As a result, if a voltage of capacitor 31 is lower than a driving voltage of the switching elements of the upper arm switching circuit, the switching elements cannot be driven.

Particularly, in a case where the upper affixing two-phase modulation is performed in which other two phases are PWM-driven during a time period when an output voltage of one phase of three phases is affixed to the DC high potential side which is a maximal voltage, if time when the switching elements of the upper arm switching circuit are continuously conducted (turned on) is long, a voltage of capacitor 31 which is a driving voltage for conducting (turning on) the switching elements of the upper arm switching circuit is lowered.

That is to say, in a case where an output frequency of the inverter device is equal to or less than predetermined output frequency s2,the voltage of capacitor 31 is lowered since the switching elements of the upper arm switching circuit are continuously conducted (turned on). Therefore, in order to prevent the voltage of capacitor 31 from being lowered, the lower affixing two-phase modulation is performed in which other two phases are PWM-driven during a time period when an output voltage of one phase of three phases is affixed to the DC low potential side which is a minimal voltage, in a case where an output frequency is equal to or less than predetermined output frequency s2. Thereby, the switching elements of the upper arm switching circuit can be stabilized and be driven.

On the other hand, if an AC frequency exceeds output frequency s2, the inverter device is preferably driven using the upper affixing two-phase modulation. Thereby, it is possible to implement an inverter device having a low circuit loss.

As described above, a change between the lower affixing two-phase modulation and the upper affixing two-phase modulation is made at predetermined output frequency s2 in the inverter device, and thereby the inverter device can be driven in a state where the circuit loss is low over the full range of the output frequency.

As described above, according to the inverter device of the first and second embodiments, the driving circuit is constituted by the bootstrap circuit using different kinds of switching elements, the voltage-driven switching elements for the upper arm switching circuit and the current-driven switching elements for the lower arm switching circuit, thereby achieving simplification of the driving circuit and low costs. Through an optimal driving control by changing the driving methods of the switching elements at a predetermined output frequency, it is possible to implement an inverter device having improved efficiency along with stable driving by reducing circuit loss.

### THIRD EXEMPLARY EMBODIMENT

Hereinafter, an electric apparatus according to a third embodiment of the present invention will be described with reference to the drawing by exemplifying a vacuum cleaner.

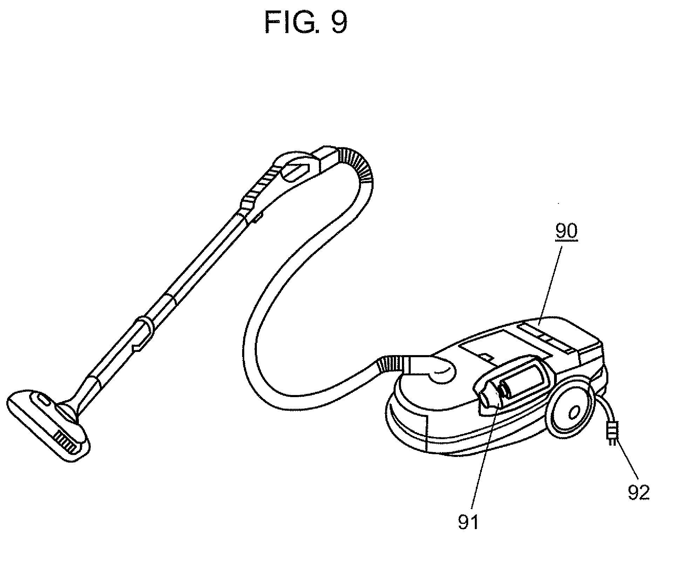

Fig. 9 is a cutaway perspective view illustrating an outline of the vacuum cleaner according to the third embodiment of the present invention.

That is to say, the embodiment has the inverter device described in the first embodiment or the second embodiment embedded therein, and is used as a driving device of a motor for the fan of the vacuum cleaner.

Specifically, as shown in Fig. 9, the vacuum cleaner outputs AC power, which is input via power receptacle 92, at a predetermined output frequency via the inverter device, and drives, for example, motor 91 for a fan such as an inverter fan motor, inside vacuum cleaner main body 90. Thereby, the fan rotates at a predetermined rotation rate, and the vacuum cleaner suctions dust and the like.

That is to say, according to the present embodiment, the high efficiency inverter device is incorporated at low costs, and thereby it is possible to implement a vacuum cleaner having high efficiency, high reliability, and high suction power, with a low cost configuration.

Although an example where the inverter device is used in the vacuum cleaner as an electric apparatus has been described in the third embodiment, the present invention is not limited thereto. For example, the inverter device may be used for a driving device of a motor of an electric washing machine, an air conditioner, a refrigerator or a power apparatus, and the same effects can be achieved.

Although an example where gallium nitride (GaN) is used as the current-driven switching element and IGBT is used as the voltage-driven switching element has been described in each embodiment, the present invention is not limited thereto. For example, as long as the same characteristics are shown, a MOSFET element may be used as the voltage-driven switching element, and a semiconductor element such as a bipolar transistor element may be used as the current-driven switching element. Thereby, it is possible to implement an inverter device according to required performance by widening a selection range of switching elements.

### INDUSTRIAL APPLICABILITY

The present invention may be widely applied to an inverter device requiring high efficiency and high reliability, and to an electric apparatus such as a vacuum cleaner using the same.

### REFERENCE MARKS IN THE DRAWINGS

- 1: AC POWER SUPPLY
- 2: INVERTER DEVICE
- 3: MOTOR
- 4: RECTIFYING CIRCUIT
- 5: SMOOTHING CAPACITOR
- 5a: LOW POTENTIAL SIDE
- 5b: HIGH POTENTIAL SIDE
- 21: DRIVING CIRCUIT
- 22, 23, 24, 25, 26, 27: SWITCHING ELEMENT
- 22a, 23a, 24a: FREE WHEELING DIODE
- 28: CONTROL UNIT
- 29: DRIVER POWER SUPPLY
- 30: DIODE
- 31: CAPACITOR
- 32: UPPER ARM DRIVER CIRCUIT
- 33: LOWER ARM DRIVER CIRCUIT
- 90: VACUUM CLEANER MAIN BODY
- 91: MOTOR
- 92: POWER RECEPTACLE
- C1, C2, C3: CONNECTION POINT

## Claims

1. An inverter device comprising:
an upper arm switching circuit;
a lower arm switching circuit;
a control unit that controls the upper arm switching circuit and the lower arm switching circuit;
a plurality of voltage-driven switching elements forming the upper arm switching circuit;
a plurality of current-driven switching elements forming the lower arm switching circuit; and
a bootstrap circuit that applies a driving voltage to the switching elements of the upper arm switching circuit and the lower arm switching circuit.

2. The inverter device of Claim 1, wherein the bootstrap circuit comprises:
a driver power supply that applies the driving voltage to the lower arm switching circuit via a lower arm driver circuit;
a capacitor that applies the driving voltage to the upper arm switching circuit via an upper arm driver circuit, and of which a low voltage side is connected to connection points between the switching elements of the upper arm switching circuit and the switching elements of the lower arm switching circuit; and
a diode connected between the driver power supply and the capacitor.

3. The inverter device of Claim 1, wherein, in a case where a carrier frequency is equal to or more than a predetermined carrier frequency, the switching elements having a lower circuit loss are driven by a pulse width modulation (PWM) of the switching elements forming the lower arm switching circuit and the switching elements forming the upper arm switching circuit.

4. The inverter device of Claim 1, wherein, in a case where a carrier frequency is equal to or less than a predetermined carrier frequency, the switching elements having a higher circuit loss are driven by a pulse width modulation (PWM) of the switching elements forming the lower arm switching circuit and the switching elements forming the upper arm switching circuit.

5. The inverter device of Claim 3 or 4, wherein the predetermined carrier frequency for changing driving methods of the upper arm switching circuit and the lower arm switching circuit is a carrier frequency where the circuit loss when the lower arm switching circuit is driven by the pulse width modulation (PWM) is the same as the circuit loss when the upper arm switching circuit is driven by the pulse width modulation (PWM).

6. The inverter device of Claim 1, wherein, in a case where an output frequency is equal to or less than a predetermined output frequency, the upper arm switching circuit is driven by a pulse width modulation (PWM).

7. The inverter device of Claim 6, wherein the predetermined output frequency is an output frequency where a voltage of the capacitor of the bootstrap circuit is the same as a driving voltage of the switching elements of the upper arm switching circuit.

8. The inverter device of Claim 1, wherein, in a case where the current-driven switching elements forming the lower arm switching circuit have a lower conduction loss than the voltage-driven switching elements forming the upper arm switching circuit, driving is performed by a pulse width modulation (PWM) through a two-phase modulation where minimal voltages of three-phase output voltages are affixed to a low potential side of a power supply voltage.

9. The inverter device of Claim 1, wherein, in a case where the voltage-driven switching elements forming the upper arm switching circuit have a lower conduction loss than the current-driven switching elements forming the lower arm switching circuit, driving is performed by a pulse width modulation (PWM) through a two-phase modulation where maximal voltages of three-phase output voltages are affixed to a high potential side of a power supply voltage.

10. The inverter device of Claim 9, wherein, in a case where an output frequency is equal to or less than a predetermined output frequency, driving is performed by a pulse width modulation (PWM) through a two-phase modulation where minimal voltages of the three-phase output voltages are affixed to a low potential side of the power supply voltage.

11. The inverter device of Claim 10, wherein the predetermined output frequency is an output frequency where a voltage of the capacitor of the bootstrap circuit is the same as a driving voltage of the switching elements of the upper arm switching circuit.

12. The inverter device of Claim 1, wherein the voltage-driven switching element is an IGBT.

13. The inverter device of Claim 1, wherein the voltage-driven switching element is a MOSFET.

14. The inverter device of Claim 1, wherein the current-driven switching element is a gallium nitride (GaN) semiconductor.

15. The inverter device of Claim 1, wherein the current-driven switching element is a bipolar transistor semiconductor.

16. An electric apparatus comprising a driving device of a motor for which the inverter device of Claim 1 is used.
